# EUROPÄISCHE PATENTSCHRIFT

(11) **EP 2 181 868 B1**
(45) Veröffentlichungstag und Bekanntmachung des Hinweises auf die Patenterteilung: **02.10.2013**
(21) Anmeldenummer: 09174605.7
(22) Anmeldetag: 30.10.2009
(51) Int. Cl.: B60D 1/54

(54) **Anhängekupplung**
Tow bar
Attelage

(30) Priorität: 30.10.2008 DE 102008043318
(43) Veröffentlichungstag der Anmeldung: 05.05.2010
(73) Patentinhaber: MVG Metallverarbeitungsgesellschaft mbH, 52249 Eschweiler (DE)
(72) Erfinder: Schlappa, Edward, 52249 Eschweiler (DE); Noppen, Christoph, 52078 Aachen (DE)
(74) Vertreter: Bauer, Dirk

(56) Entgegenhaltungen:
- WO-A-2006/068478
- DE-A1-102006 041 699
- FR-A- 2 450 167
- US-B1- 7 052 032

## Beschreibung

### Einleitung

Die Erfindung betrifft eine Anhängekupplung mit einer mit einem Fahrzeugteil verbindbaren Aufnahmeeinrichtung und einer Kugelstange, die an einem Ende mit einer Kupplungskugel zur Ankopplung eines Kupplungselements eines Anhängers und an einem gegenüber liegenden Ende mit einem Einsteckabschnitt versehen ist, der in einen Aufnahmeabschnitt der Aufnahmeeinrichtung einführbar und darin in einer Betriebsstellung der Kugelstange mittels eines in seiner Sperrstellung befindlichen Verriegelungselements so arretierbar ist, dass im Anhängebetrieb des Fahrzeugs auftretende Kräfte und Momente von der Kugelstange über die Aufnahmeeinrichtung in das Fahrzeugteil übertragbar sind, wobei die Kugelstange nach Überführung des Verriegelungselements von der Sperrstellung in eine Freigabestellung von der Betriebsstellung in eine Losstellung überführbar ist, in der der Einsteckabschnitt der Kugelstange vollständig aus dem Aufnahmabschnitt der Aufnahmeeinrichtung entfernt ist, wobei die Anhängekupplung eine Verbindungseinrichtung aufweist, die zusätzlich zu der nur in Betriebsstellung wirksamen Aufnahmeeinrichtung eine ständige Verbindung zwischen der Kugelstange und dem Fahrzeugteil bildet und die eine Überführung der Kugelstange von der Losstellung in eine Ruhestellung erlaubt, in der die Kugelstange mittels einer Arretiereinrichtung arretierbar und aus der heraus die Kugelstange nach Lösen der Arretiereinrichtung wieder in die Losstellung rücküberführbar ist.

### Stand der Technik

Bei Anhängekupplungen wird typischerweise zwischen starren Kupplungen, die dauerhaft am Fahrzeug verbleiben und nicht ohne weiteres vom Benutzer vom Fahrzeug lösbar sind, abnehmbaren Kupplungen, deren Kugelstange bei Nicht-Gebrauch der Kupplung von der fahrzeugfesten Aufnahmeeinrichtung entfernbar und an einem beliebigen Ort (z.B. Kofferraum o.ä.) lagerbar sind, und schwenkbaren Kupplungen, bei denen die Kugelstange von der Betriebsstellung in eine Ruhestellung überführbar ist, in der sie typischerweise unsichtbar in einem Ruheraum hinter der Stoßstange des Fahrzeugs untergebracht ist, unterschieden. Bei schwenkbaren und abnehmbaren Anhängekupplungen befindet sich somit die Kugelstange nur dann in ihrer Betriebsstellung, wenn das Fahrzeug auch tatsächlich im Anhängerbetrieb benutzt wird, wohingegen zu den übrigen Zeiten die Kugelstange nicht störend über das Fahrzeugheck hinaus steht.

Schwenkbare Anhängekupplungen sind beispielsweise aus der EP-A-1 557 299, der DE-A-10 2004 044 912, der WO 2008/049569, der DE-A-198 26 618, der DE-A-196 54 867, der DE-A-196 12 959, den EP-A-1 586 471, EP-A-1 586 470 und EP-A-1 584 499, der EP-A-1 533 149, der DE-A-100 23 640, der DE-A-101 04 185 sowie der WO 2005/110781 bekannt.

So ist die Anhängekupplung gemäß der EP-A-1 557 299 und gemäß der DE-A-10 2004 044 912 mit einem dreiachsig schwenkbaren Gelenk, insbesondere mit einem Kugelgelenk, am fahrzeugseitigen Ende der Kugelstange versehen, wodurch eine dreiachsige Schwenkbarkeit und somit eine große Freiheit bei der Überführung der Kugelstange von der Betriebsstellung in die Ruhestellung möglich ist.

Bei der Anhängekupplung gemäß der WO 2008/049569 ist die Kugelstange um einen zentralen Punkt und um eine durch den zentralen Punkt verlaufende nicht raumfeste Achse verschwenkbar. Dabei sind bei dem Getriebe dieser vorbekannten Anhängekupplung drei drehbar gelagerte Verbindungsglieder vorhanden (Kurbel, Schwinge und Koppel), deren Drehachsen sich alle in einem zentralen Punkt, um den die Kugelstange schwenkbar ist, schneiden. Die Freiheitsgrade bei der Auslegung des Überführungswegs von der Betriebsin die Ruheposition und umgekehrt sind sehr groß.

Gemäß der DE-A-198 26 618 wird die Kugelstange der bekannten Anhängekupplung ausgehend von der Betriebsposition zunächst abgesenkt. Anschließend wird eine Drehbewegung um eine vertikale Drehachse ausgeführt, woran sich wieder eine vertikale Aufwärtsbewegung der Kugelstange anschließt, um auf diese Weise die Ruhestellung zu erreichen. Zur Realisierung der Überführung der Kugelstange sind Überführungsmittel in Form einer in die Oberfläche des fahrzeugseitigen Endes der Kugelstange eingebrachten Führungsnut vorgesehen, die aus zwei geraden Nutabschnitten und einen die beiden geraden Abschnitte in ihrem oberen Bereich verbindenden, um etwa 180° gekrümmten Nutabschnitt bestehen. Auf diese Weise wird eine Zwangsführung bei der Bewegung der Kugelstange von der Betriebs- in die Ruheposition und umgekehrt gewährleistet, wodurch die Verwendung eines einfacheren Antriebs für eine motorische Verstellung der Kugelstange möglich wird.

Bei der DE-A-196 54 867 erfolgen sowohl die Schwenkbewegung der Kugelstange als auch die Bewegung eines Verriegelungselements von dessen Verriegelungsstellung in die Entriegelungsstellung mit Hilfe eines Antriebs. Dabei soll beim Schwenken in die oder aus der Betriebsstellung eine selbsttätige Ver- bzw. Entriegelung erfolgen.

Zum Stand der Technik zählen darüber hinaus Anhängekupplungen (z.B. DE-A-196 12 959), bei denen die Kugelstange um eine einzige, schräg zur Fahrzeuglängsachse sowie schräg zur Fahrzeughochachse verlaufende Schwenkachse drehbar ist. Auf diese Weise kann ausgehend von der Betriebsposition eine hinsichtlich Sichtbarkeit und Platzverhältnisse akzeptable Ruheposition erreicht werden. Die Realisierung der Lagerung ist vergleichsweise einfach, jedoch die Freiheit bei der Wahl des Überführungsweges von der Betriebs- in die Ruheposition gewissen Restriktionen unterworfen.

Die aus den älteren Anmeldungen EP-A-1 586 471, EP-A-1 586 470 und EP-A-1 584 499 bekannten Anhängekupplungen zeichnen sich dadurch aus, dass bei der Überführung der Kugelstange von der Ruhe- in die Betriebsstellung bzw. umgekehrt eine kombinierte translatorische und rotatorische Bewegung vorliegt. Die Kugelstange wird in einem ersten Bewegungsabschnitt durch Verdrehen eines so genannten Drehachsglieds verschwenkt. Am oberen Ende des Drehachsglieds ist ein Mitnehmerbolzen exzentrisch angeordnet, der innerhalb einer am Gehäuse angeordneten Kulisse läuft und das Drehachsglied in Drehung versetzt bis eine Drehung von ca. 90° erfolgt ist. Dabei greift eine Ausnehmung im Drehachsglied in ein dazu passendes Formteil am Gehäuse ein, so dass das Drehachsglied verdrehsicher gehalten wird, indem die Ausnehmung mit dem Formteil verkeilt ist. Gemäß der EP-A-1 586 470 wird die Drehbewegung der Kugelstange durch ein Zusammenwirken eines Mitnehmerbolzens in einer Gehäusekurvenbahn gesteuert. Ein ähnliches Prinzip ist in der EP-A-1 584 499 offenbart.

Bei der Anhängekupplung gemäß der EP-A-1 533 149 liegt wiederum eine Kombination von schwenkbarer und axial verschiebbar gelagerter Kugelstange vor. Sowohl in der Betriebsstellung als auch in der Ruhestellung der Kugelstange soll die Kugelstange dadurch drehfest festlegbar sein, dass Formschlusskonturen eines Kugelstangenlagerkopfs einerseits und eines diesem gegenüberliegenden Bauteils andererseits miteinander in Eingriff gebracht werden. Der Kugelstangelagerkopf der bekannten Anhängekupplung ist dabei mit einer Bahnsteuerung auf einem Taumellager angeordnet, wodurch beim Schwenken der Kugelstange eine Bewegung um einen sich im Raum verändernden Punkt stattfindet. Es ergeben sich hieraus mannigfaltige Freiheitsgrade bei der Auswahl der gewünschten Verstellbewegung der Kugelstange.

Darüber hinaus beschreibt auch die DE-A-100 23 640 ein Kupplungssystem, bei dem sich die Verstellbewegung der Kugelstange aus zwei Bewegungsabschnitten zusammensetzt und zwar einen ersten Abschnitt in Form einer Drehbewegung eines so genannten Drehachsglieds und einem zweiten Abschnitt in Form einer translatorischen Bewegung nach oben, um aus einer Zwischenstellung heraus die Ruhestellung zu erreichen. Die Schwenkbewegung um die vertikale Achse wird dabei dergestalt durchgeführt, dass das schwenkbare Drehachsglied um ein fahrzeugfestes Drehlagerteil verschwenkt wird, wozu an einem Hebel des Drehachsglieds ein linear wirkender Antrieb angelenkt ist.

Ferner offenbart die DE-A-101 04 185 noch ein Kupplungsprinzip, bei dem Schwenkbewegungen um zwei Achsen zur Anwendung kommen. Zunächst schwenkt die Kugelstange um die im Wesentlichen vertikal ausgerichtete Achse eines Drehachsgliedes. Dieses ist wiederum in einer so genannten Drehlagereinrichtung gelagert, die insgesamt, d.h. zusammen mit der Kugelstange und dem Drehachsglied, um eine im Wesentlichen horizontale zweite Achse schwenkbar ist. Bei letztgenannter Schwenkbewegung führt die Kugelstange eine Hoch-Tief-Bewegung aus.

Schließlich ist in der WO 2005/110781 noch eine Anhängekupplung mit einer Kugelstange offenbart, die gelenkig mit einem fahrzeugfesten Halteelement verbunden ist. Die Kugelstange ist um zwei Drehachsen schwenkbar, die in einem Winkel zueinander verlaufen. Dabei ist das dem Fahrzeug zugewandte Ende der Kugelstange mit einem Antriebsnocken versehen, der in Eingriff mit Antriebsmitteln ist. Diese bewirken eine Art Zwangsführung bei der Bewegung der Kugelstange von der Betriebs- in die Ruhestellung. An dem dem Fahrzeug zugewandten Ende der Kugelstange kann ein kugelförmiges Element vorhanden sein, das mit einem Vorsprung (Zapfen) versehen ist und von einem gleichfalls kugelförmigen Lagergehäuse umgeben ist, in dem eine Führungsnut zur Führung des Zapfens im kugelförmigen Ende der Kugelstange vorhanden ist.

Allen vorgenannten Prinzipien schwenkbarer Anhängekupplungen ist gemein, dass die Lagerungs- und Schwenkkonstruktionen vergleichsweise kompliziert aufgebaut sind und die sichere Übertragung der im Anhängebetrieb auf die Kugelstange wirkenden Kräfte in der Betriebsposition der Kugelstange nur mit vergleichsweise großem Aufwand möglich ist.

Das zweite Grundprinzip, nämlich das der abnehmbaren Anhängekupplungen, ist beispielsweise aus der DE-A- 40 22 764 oder DE-A-42 43 552 bekannt. Bei den vorbekannten abnehmbaren Anhängekupplungen erfolgt die Einführung des Einsteckabschnitts der Kugelstange in den darin angepassten Aufnahmeabschnitt der Aufnahmeeinrichtung meist durch eine lineare Bewegung (in horizontale oder vertikale Richtung) oder eine Bewegung entlang einer leicht gekrümmten Bahnkurve. Hat die Kugelstange ihre Betriebsstellung in der Aufnahmeeinrichtung erreicht, so kann sie in dieser Stellung mittels eines Verriegelungselements, das dazu - eventuell automatisch und mittels Federvorspannung - in seine Sperrstellung überführt wird, arretiert werden, um die im Anhängebetrieb des Fahrzeugs auftretende Kräfte und Momente vom Anhänger in das Zugfahrzeug bzw. umgekehrt übertragen zu können. Bei der DE-A-42 43 552 ist das Verriegelungselement in Form eines so genannten Keilschiebers ausgeführt, der verschiebbar innerhalb einer Lagernut im Endabschnitt der Kugelstange gelagert ist. Die Betätigung des Keilschiebers erfolgt über einen Hebel oder ein Handrad, von dem aus Kräfte über eine Verzahnung auf den Keilschieber übertragbar sind. Der Keilschieber bzw. das Handrad sind mittels mindestens eines Federelements in Richtung auf die Sperrstellung vorgespannt und zudem in der Sperrstellung noch mittels eines Sicherungselements gegen unbeabsichtigtes Lösen gesichert.

Die Arretierungsprinzipien bei derartigen Anhängekupplungen sind seit geraumer Zeit bewährt. Allerdings geht der Wunsch vieler Fahrzeugnutzer heute vielfach dahin, über eine von Hand oder vollautomatisch mittels mindestens eines Abtriebs verschwenkbare Kugelstange zu verfügen. Bei abnehmbaren Kugelstangen hingegen sind eine Bedienung von Hand und ein Verstauen an einem geeigneten Ort unerlässlich, was mitunter als lästig empfunden wird und darüber hinaus die Gefahr von Verschmutzungen des Fahrzeugnutzers bei der Montage oder Demontage provoziert.

Ein Mischtyp der beiden vorstehend beschriebenen Grundtypen ist jeweils aus der DE 10 2006 041 699 A1, die zur Bildung des Oberbegriffs des Anspruchs 1 herangezogen wurde, und der DE 20 2006 009 230 U1 bekannt. Bei den aus den beiden vorgenannten Druckschriften bekannten Anhängekupplungen wird die hülsenförmige Aufnahmeeinrichtung für die Kugelstange dahingehend doppelt genutzt, als es zwei unterschiedliche, für sich betrachtet jeweils genau definierte Aufnahmepositionen für den Einsteckabschnitt der Kugelstange gibt: Während in der ersten Aufnahmeposition die Kugelstange sich in der Betriebsstellung befindet, wird durch eine 90°-Drehung der Kugelstange um die Längsachse des Einsteckabschnitts die Ruhestellung erreicht. Die beiden Aufnahmepositionen zeichnen sich jeweils durch schlitzartige, am unteren Ende V-förmig geformte Ausnehmungen in der Wandung der Aufnahmeeinrichtung auf. In diese Ausnehmungen greifen zwei radial nach außen vorstehende prismenartige Vorsprünge an dem Einsteckabschnitt der Kugelstange ein, um eine formschlüssige, gegen Verdrehen gesicherte Fixierung der Kugelstange sowohl in der Betriebs- als auch in der Ruhestellung zu erzielen.

Besonders nachteilig ist dabei das in der DE 20 2006 009 230 beschriebene Verstellprinzip, da hierbei lediglich eine Drehbewegung der Kugelstange um die Längsachse der Aufnahme bzw. des Einsteckabschnitts der Kugelstange möglich ist. Hierdurch muss die Kugelstange so weit abgesenkt werden, dass die Kupplungskugel bei der Schwenkbewegung von der Betriebs- in die Ruhestellung unterhalb der Unterseite eines Stoßfängers hindurch geführt werden kann. Bei vielen Fahrzeugen ist die Bodenfreiheit für eine dermaßen weite Absenkung der Kugelstange nicht gegeben. Die jüngere DE 10 2006 041 699 A1 bietet demgegenüber den Vorteil, dass der darin offenbarte "Manipulator" zur Verbindung der Kugelstange mit der Aufnahme mehr Freiheitsgrade besitzt und zusätzlich zu einer Drehbewegung der Kugelstange um die Längsachse der Aufnahme auch eine Schwenkbewegung der Kugelstange um eine weitere Achse erlaubt. Auch bei Fahrzeugen mit geringerer Bodenfreiheit lässt sich die Überführung der Kugelstange bewerkstelligen, weil die Kugelstange unterhalb des Stoßfängers abgekippt werden kann. Auch das in der DE 10 2006 041 699 A1 beschriebene Verstellprinzip besitzt jedoch den Nachteil, dass aufgrund der Unterbringung des Einsteckabschnitts der Kugelstange innerhalb der Aufnahme auch in der Ruhestellung die Freiheit bei der Unterbringung der Kugelstange eingeschränkt ist. Bei einer großen Zahl von Fahrzeugtypen lässt sich auch diese bekannte Anhängekupplung daher nicht einsetzen.

### Aufgabe

Der Erfindung liegt die Aufgabe zugrunde, eine Anhängekupplung der eingangs beschriebenen Art so weiter zu entwickeln, dass einerseits die im Anhängebetrieb des Fahrzeugs auftretenden Kräfte und Momente sicher und mit möglichst geringem konstruktiven Aufwand übertragbar sind und dass andererseits eine große Freiheit bei der Unterbringung der Kugelstange in ihrer Ruhestellung hinter dem Stoßfänger gegeben ist.

### Lösung

Ausgehend von einer Anhängekupplung der eingangs beschriebenen Art wird diese Aufgabe erfindungsgemäß dadurch gelöst, dass der Einsteckabschnitt der in ihrer Ruhestellung befindlichen Kugelstange außerhalb des Aufnahmeabschnitts der Aufnahmeeinrichtung angeordnet ist.

Die Erfindung verfolgt somit ausgehend von dem Prinzip einer abnehmbaren Kugelstange eine Anhängekupplung das Prinzip, dass die Kugelstange ohne diese gänzlich von dem zugeordneten Fahrzeugteil lösen zu können, in eine Ruhestellung "schwenkbar" ist, wobei unter "Schwenken" im Sinne der vorliegenden Anmeldung insbesondere auch eine kombinierte translatorische und rotatorische Bewegung verstanden wird und sich die rotatorischen Komponenten durchaus aus Schwenkbewegungsabschnitten um mehr als eine Schwenkachse zusammensetzen können. Die Erfindung basiert somit auf einer Kombination einer abnehmbaren und schwenkbaren Anhängekupplung, bei der eine funktionale Trennung zwischen der Übertragung der im Anhängebetrieb auftretenden Kräfte und Momente einerseits und der nach Lösen der Kugelstange und Überführen derselben in ihre Losstellung stattfindenden Bewegung der Kugelstange in die Ruhestellung andererseits vorliegt.

Dadurch, dass der Einsteckabschnitt der Kugelstange, wenn sich diese in ihrer Ruhestellung befindet, außerhalb des Aufnahmeabschnitts der Aufnahmeeinrichtung angeordnet ist, besteht eine sehr große Freiheit bei der Unterbringung der Kugelstange in der Ruhestellung. Dies gilt sowohl für den Ort, an dem sich der Einsteckabschnitt in der Ruhestellung befindet, als auch die Ausrichtung von dessen Längsachse. Je nach den individuellen Gegebenheiten bei den jeweils relevanten Fahrzeugtypen lassen sich somit unterschiedlichste Freiräume zwischen dem Stoßfänger und dahinter befindlichen Karosserieteilen nutzen, um die Kugelstange in der Ruhestellung zu positionieren.

Die funktionale Trennung zwischen Halterung in der Betriebsstellung einerseites und in der Ruhestellung andererseits führt dazu, dass die Aufnahmeeinrichtung mit ihrem Aufnahmeabschnitt und dem damit korrespondierenden Einsteckabschnitt der Kugelstange allein auf die Funktion einer zuverlässigen Kraft- und Momentenübertragung in Anhängebetrieb des Fahrzeugs optimiert werden kann. Die Halterung der Kugelstange in der Ruhestellung kann auf beliebige andere Weise an einem beliebigen, als geeignet identifizierten Ort - vorzugsweise natürlich in gewisser räumlicher Nähe zur Aufnahmeeinrichtung - erfolgen. Dabei wirkt die zusätzliche Verbindungseinrichtung zwischen Kugelstange und Fahrzeugteil im Grunde genommen zunächst rein als "Verliersicherung", um eine ständige Verbindung der Kugelstange mit dem Fahrzeug sicherzustellen. Eine Ausführung in Form eines Drahtseils ist daher grundsätzlich möglich, wenn auch im Hinblick auf den Bedienkomfort nicht zu bevorzugen. Andererseits kann und sollte die Verbindungseinrichtung aber auch so ausgeführt sein, dass sie für den Benutzer eine möglichst einfache und eventuell sogar - zumindest abschnittsweise - geführte Bewegung der Kugelstange von der Losstellung in die Ruhestellung möglich macht.

Während in der Ruhestellung zwischen der Kugelstange und der Aufnahmeeinrichtung keinerlei Kraftübertragung möglich ist, sind mittels der Verbindungseinrichtung in der Betriebsstellung der Kugelstange keine solchen Kräfte und/oder Momente übertragbar, die eine Bewegung der Kugelstange von der Betriebsstellung in die Losstellung hemmen und/oder verhindern könnten. Diese Kräfte und Momente werden allein von der Aufnahmeeinrichtung übertragen. Die Verbindungseinrichtung besitzt somit ausgehend von der Betriebsstellung der Kugelstange lediglich eine mehr oder weniger große Freiheitsgrade belassende Führungsfunktion, nicht jedoch eine Fixierfunktion zusätzlich zu der Aufnahmeeinrichtung. Vorteilhafterweise lässt sich die erfindungsgemäße Verbindungseinrichtung bei beliebigen Systemen von abnehmbaren Anhängekupplungen (d.h. beliebigen Kombinationen von Einsteckabschnitt und Aufnahmeabschnitt) anwenden und, falls gewünscht, sogar bei bestehenden Systemen nachrüsten.

Gemäß einer bevorzugten Ausführungsform der Anhängekupplung besteht in der Losstellung der Kugelstange zwischen dieser und der Aufnahmeinrichtung keine Verbindung mehr und eine Stirnseite der Kugelstange ist an deren dem Einsteckabschnitt zugeordneten Ende vollständig aus der Aufnahmeeinrichtung herausgezogen. Spätestens in der Losstellung verliert somit die Aufnahmeeinrichtung ihre Kopplungsfunktion und die weitere Bewegung der Kugelstange wird allein noch durch die erfindungsgemäße Verbindungseinrichtung limitiert. Nach vollständiger Entnahme der Kugelstange aus der Aufnahmeeinrichtung sollte die Verbindungseinrichtung eine Fortsetzung der Entnahmebewegung nur soweit gestatten, wie dies zur anschließenden Überführung in die Ruheposition erforderlich ist.

Die Erfindung weiter ausgestaltend ist vorgesehen, dass die Verbindungseinrichtung eine Drehung der Kugelstange um zwei unter einem Winkel zueinander verlaufende Achsen und eine Verschiebung der Kugelstange in zumindest eine Richtung erlaubt. Auf diese Weise sind für die Überführung der Kugelstange in die Ruhestellung hinreichend viele Freiheitsgrade gegeben, um auch bei eingeschränkten Platzverhältnissen eine hindernisfreie Überführung sicherzustellen. Gleichwohl ist auch eine gewisse Führung der Kugelstange sichergestellt, damit beim Nutzer nicht das Gefühl einer defekten Verbindung aufkommt.

Gemäß einer besonders vorteilhaften Weiterbildung der Erfindung erlaubt die Verbindungseinrichtung eine Drehung der Kugelstange um eine Achse, die parallel zu dem Einsteckabschnitt der Kugelstange oder dem Aufnahmeabschnitt der Aufnahmeinrichtung verläuft und des Weitern einen Abstand zu der Längsmittelachse des Einsteckabschnitts oder des Aufnahmeabschnitts aufweist. Der vorstehend beschriebene Abstand der von der Verbindungseinrichtung gebildeten Dreh- bzw. Schwenkachse einerseits und der Längsachse des Aufnahmeabschnitts bzw. Einsteckabschnitts andererseits erleichtert die funktionale Trennung zwischen der Halterungs- und Fixierfunktion im Bereich der Aufnahmeeinrichtung auf der einen Seite und der Ermöglichung einer Schwenkbewegung bzw. kombinierten Schwenk- und translatorischen Bewegung der Kugelstange ausgehend von der Losstellung auf der anderen Seite.

In konstruktiver Hinsicht besonders einfach ausführen lässt sich das Prinzip der zusätzlichen Verbindungseinrichtung, wenn die Kugelstange mit einem senkrecht von dieser abstehenden und in Betriebsstellung der Kugelstange vor dem Einsteckabschnitt angeordneten Zapfen versehen ist der über ein Drehgelenk an eine Stange gekoppelt ist, die senkrecht zu dem Zapfen verläuft und in einem Schiebe-Drehgelenk an das Fahrzeugteil gekoppelt ist. Es ist somit eine rotatorische Bewegung um jeweils zwei unter einem Winkel zueinander verlaufender Drehachsen sowie zusätzlich eine translatorische Bewegung der Kugelstange möglich, so dass große Freiheit bei dem Überführungsweg der Kugelstange besteht. Der Zapfen kann dabei gleichzeitig auch als Anschlagelement beim Einschieben des Einsteckabschnitts in den Aufnahmeabschnitt dienen und erfüllt somit konstruktiv betrachtet eine Doppelfunktion.

Gemäß einer bevorzugten Ausgestaltung der Erfindung schneiden sich die Längsmittelachsen des Einsteckabschnitts der Kugelstange in der Ruhestellung einerseits und in der Betriebsstellung andererseits nicht.

Eine vorteilhafte Weiterbildung der erfindungsgemäßen Anhängekupplung sieht vor, dass die Aufnahmeeinrichtung auf ihrer der Kupplungskugel abgewandten Rückseite derart offen ausgeführt ist, dass der Einsteckabschnitt nach Überführung des Verriegelungselements von der Sperrstellung in die Freigabestellung und einem eventuellen Herausziehen des Einsteckabschnitts aus dem Aufnahmeabschnitt um einen Weg von maximal 20 mm in die Ruhestellung überführbar ist, vorzugsweise durch eine Schwenkbewegung um eine neben der Aufnahmeeinrichtung befindliche vertikale Achse. Der Platzbedarf bei der Überführung der Kugelstange von der Betriebs- in die Ruhestellung wird hierbei reduziert, da die Losstellung bereits nach einem sehr kurzen Weg - bezogen auf die Betriebsstellung - erreicht wird. Im Vergleich mit abnehmbaren Anhängekupplungen, bei denen die Aufnahmeeinrichtung als so genannte "geschlossene Hülse" ausgeführt ist, bietet eine wie vorstehend beschriebene zumindest rückseitig "offene Hülse" neben der Vereinfachung des Überführungsvorgangs noch den Vorteil, dass eine so genannte "Scheinverriegelung" vermieden werden kann, da die beim Stand der Technik vorhandene Rückseite der Aufnahmeeinrichtung fatalerweise Haltekräfte auf die Kugelstange ausüben kann, die trotz fehlender ordnungsgemäßer Verriegelung ein zumindest "lockeres" Halten der Kugelstange in der Aufnahmeeinrichtung bewirken und somit den Fahrzeugnutzer über die nicht ordnungsgemäße Verrieglung der Kugelstange im Unklaren lassen können.

Um die Bewegung der Kugelstange von der Ruhestellung zurück in die Los- bzw. die Betriebsstellung zu erleichtern, kann ein Federelement vorgesehen sein, das die in der Ruhestellung befindliche Kugelstange in Richtung auf die Losstellung und/oder die Betriebsstellung oder die in der Losstellung befindliche Kugelstange in Richtung auf die Betriebsstellung und/oder Ruhestellung vorspannt. Wird somit die Arretiervorrichtung deaktiviert, findet eine von Federkraft unterstützte Rückbewegung der Kugelstange in Richtung auf die Losstellung bzw. die Betriebsstellung statt. Der Bedienungskomfort kann hierdurch deutlich gesteigert werden. In diesem Zusammenhang ist es besonders vorteilhaft, wenn in einem Lagerkörper für eine vertikale Schwenkbewegung der Kugelstange eine koaxial zu der Schwenkachse angeordnete Schraubenfeder angeordnet ist, die eine mit der Kugelstange verbundene Stange mit einem Drehgelenk in Richtung auf den Lagerkörper, d.h. vertikal nach oben, zu oder davon weg vorspannt und gleichzeitig eine Verschwenkung der Kugelstange um die vertikale Schwenkachse dergestalt versucht auszuführen, dass die Kugelstange in eine zu einer Fahrzeuglängsachse parallelen Stellung gelangt oder die Kugelstange aus einer zu der Fahrzeuglängsachse parallele Stellung heraus schwenkt. Mit einer einzigen Schraubenfeder können auf diese Weise sowohl eine translatorische als auch eine rotatorische Bewegung ausgeführt werden.

Der Bedienvorgang für den Fahrzeugnutzer kann darüber hinaus dadurch erhöht werden, dass an der Kugelstange, insbesondere deren Winkelstück oder deren Zapfen, ein Anschlagelement vorgesehen wird, das durch einen Anschlag an der Aufnahmeeinrichtung, insbesondere deren Wange oder Seitenteil, einen maximalen Schwenkwinkel der Kugelstange um die vertikale Achse dergestalt festlegt, dass die Kugelstange sich ausgehend von der Betriebsstellung nur um 90°, d.h. in eine senkrecht zu einer Fahrzeuglängsachse stehende Position schwenken lässt.

Die Erfindung wird darüber hinaus auch von einer als Nachrüstteil separat zu vermarktenden Verbindungseinrichtung zur Verbindung einer Kugelstange einer Anhängekupplung mit einem Fahrzeugteil gebildet, wobei die Kugelstange an einem Ende mit einer Kupplungskugel zur Ankopplung eines Kupplungselements eines Anhängers und an einem gegenüber liegenden Ende mit einem Einsteckabschnitt versehen ist, der in einen Aufnahmeabschnitt einer Aufnahmeeinrichtung einführbar und darin in einer Betriebsstellung der Kugelstange mittels eines in seiner Sperrstellung befindlichen Verriegelungselements so arretierbar ist, dass im Anhängebetrieb des Fahrzeugs auftretende Kräfte und Momente von der Kugelstange über die Aufnahmeeinrichtung in das Fahrzeugteil übertragbar sind, wobei die Kugelstange nach Überführung des Verriegelungselements von der Sperrstellung in eine Freigabestellung von der Betriebsstellung in eine Losstellung überführbar ist, in der der Einsteckabschnitt der Kugelstange vollständig aus dem Aufnahmeabschnitt der Aufnahmeeinrichtung entfernt ist, wobei die Verbindungseinrichtung eine zusätzlich zu der nur in Betriebsstellung wirksamen Aufnahmeeinrichtung eine ständige Verbindung zwischen der Kugelstange und dem Fahrzeugteil bildet und eine Überführung der Kugelstange von der Losstellung in eine Ruhestellung erlaubt, in der die Kugelstange mittels einer Arretiereinrichtung arretierbar und aus der heraus die Kugelstange nach Lösen der Arretiereinrichtung wieder in die Losstellung rücküberführbar ist, wobei der Einsteckabschnitt der in ihrer Ruhestellung befindlichen Kugelstange außerhalb des Aufnahmeabschnitt der Aufnahmeeinrichtung angeordnet ist.

### Ausführungsbeispiel

Die Erfindung wird nachfolgend anhand eines Ausführungsbeispiels einer Anhängekupplung, die in der Zeichnung in verschiedenen Stellungen der Kugelstange dargestellt ist, näher erläutert.

### Es zeigt:

- Fig. 1:: Eine erste perspektivische Ansicht einer Anhängekupplung mit der Kugelstange in der Betriebsstellung,
- Fig. 2:: wie Figur 1, jedoch in einer zweiten perspektivischen Ansicht,
- Fig. 3:: wie Figur 1, jedoch in einer Vorderansicht,
- Fig. 4:: wie Figur 1, jedoch in einer Seitenansicht,
- Fig. 5:: eine vergrößerte Darstellung des Aufnahmeabschnitts der Aufnahmeeinrichtung und des Einsteckabschnitts der Kugelstange in deren Betriebsstellung sowie eines Verriegelungselements für die Kugelstange in dessen Sperrstellung,
- Fig. 6:: wie Figur 5, jedoch in der Freigabestellung des Verriegelungselements,
- Fig. 7:: eine perspektivische Ansicht der Anhängekupplung in einer Losstellung der Kugelstange,
- Fig. 8 bis 12:: diverse Zwischenstellungen der Kugelstange bei der Überführung von der Losstellung in die Ruhestellung,
- Fig. 13:: eine Seitenansicht der Anhängekupplung der Kugelstange in der Ruhestellung,
- Fig. 14 bis 16:: wie Figur 13, jedoch in verschiedenen perspektivischen Ansichten mit zusätzlicher Darstellung der Arretiereinrichtung und
- Fig. 17 und 18:: jeweils eine Anhängekupplung mit alternativer Arretiereinrichtung.

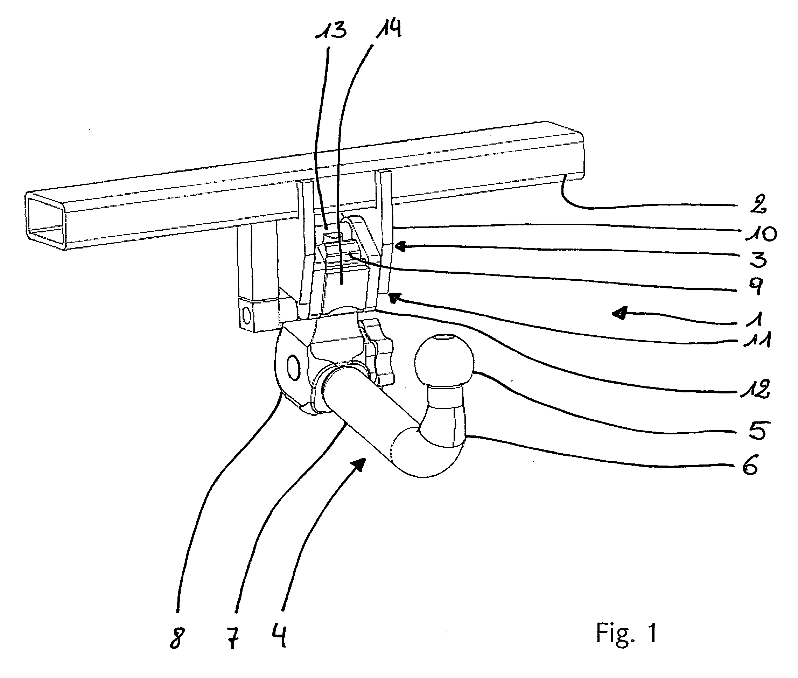

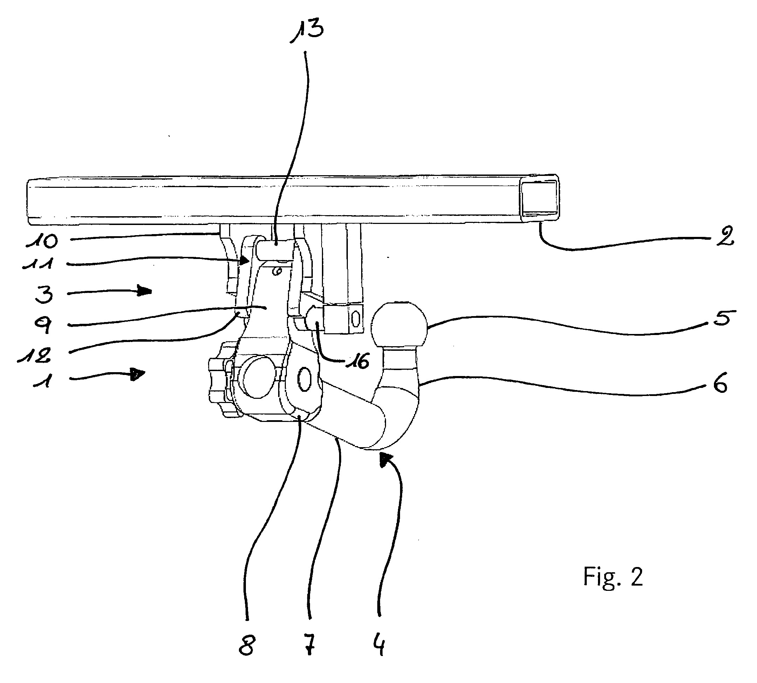

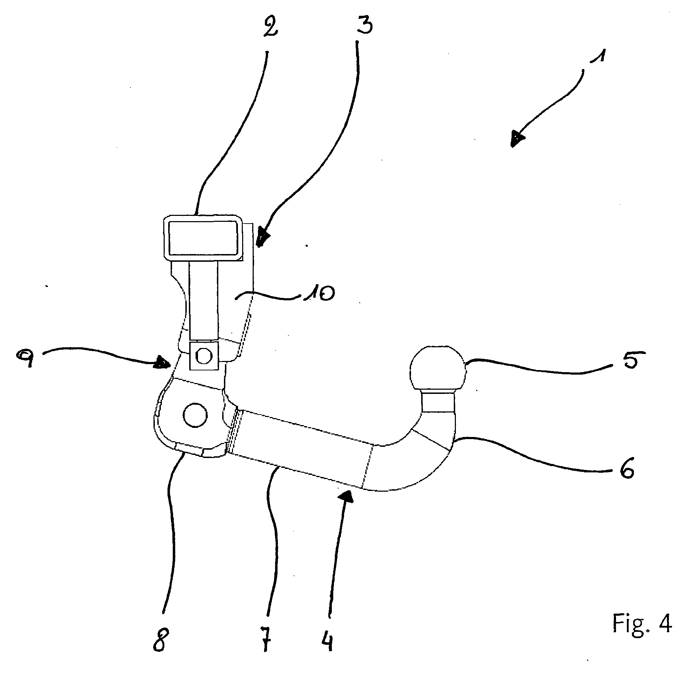

Die Figuren 1 bis 6 zeigen eine in ihrer Betriebsstellung befindliche Anhängekupplung 1, die aus einer mit einem Fahrzeugteil 2 in Form eines Rohres mit Rechteckquerschnitt verbundenen Aufnahmeeinrichtung 3 und einer mit dieser verbundenen Kugelstange 4 zusammengesetzt ist. Die Kugelstange 4 besitzt an ihrem dem Fahrzeugteil 2 abgewandten Ende eine Kupplungskugel 5, an dem ein nicht dargestelltes Kupplungselement eines Anhänger ankuppelbar ist. Im Anschluss an die Kupplungskugel 5 befindet sich ein verjüngter, jedoch im Querschnitt in Richtung auf das Fahrzeugteil 2 zu wieder anwachsender Kugelhals 6, der in einen zylinderförmigen Abschnitt 7 der Kugelstange 4 übergeht, welcher wiederum in ein Winkelstück 8 mündet.

Die Kugelstange 4 weist darüber hinaus an ihrem der Kupplungskugel 5 abgewandten Ende einen ungefähr rechtwinklig zu dem Abschnitt 7 verlaufenden Einsteckabschnitt 9 auf, der in der Betriebsstellung der Kugelstange 4 mit der Aufnahmeeinrichtung 3 zusammenwirkt.

Die Aufnahmeeinrichtung 3 besteht zum einen aus zwei mit dem Fahrzeugteil 2 verschweißten Wangen 10, zwischen denen ein Aufnahmeabschnitt 11 der Aufnahmeeinrichtung 3 angeordnet ist.

Der Aufnahmeabschnitt 11 besteht aus zwei plattenförmigen und parallel zu den Wangen 10 verlaufenden und mit diesen verschweißten Seitenteilen 12, einem an seinen beiden Enden in die beiden Seitenteile 12 eingesteckten Verbindungsbolzen 13 und einem zwischen den beiden Seitenteilen 12 angeordneten und mit diesen verschweißten, plattenförmigen Vorderteil 14. Die Seitenteile 12 weisen an ihrem dem Winkelstück 8 zugewandten stirnseitigen Ende eine im Querschnitt ungefähr halbkreisförmige Aussparung 15 auf, die im eingeführten Zustand des Einsteckabschnitts 9 der Kugelstange 4 mit zwei seitlich über den Einsteckabschnitt 9 vorstehenden Zapfen 16 zusammenwirken und eine in Einschubrichtung betrachtet definierte Endposition des Einsteckabschnitts 9 in dem Aufnahmeabschnitt 11 festlegen.

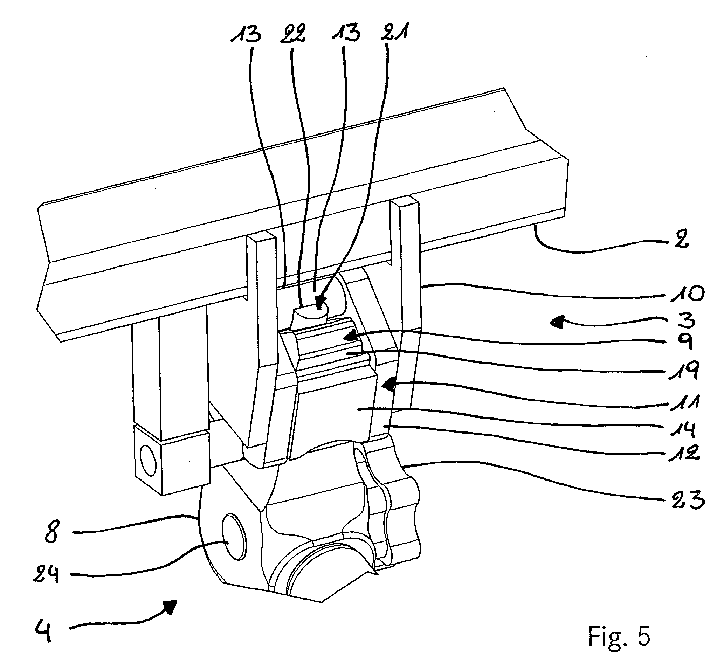

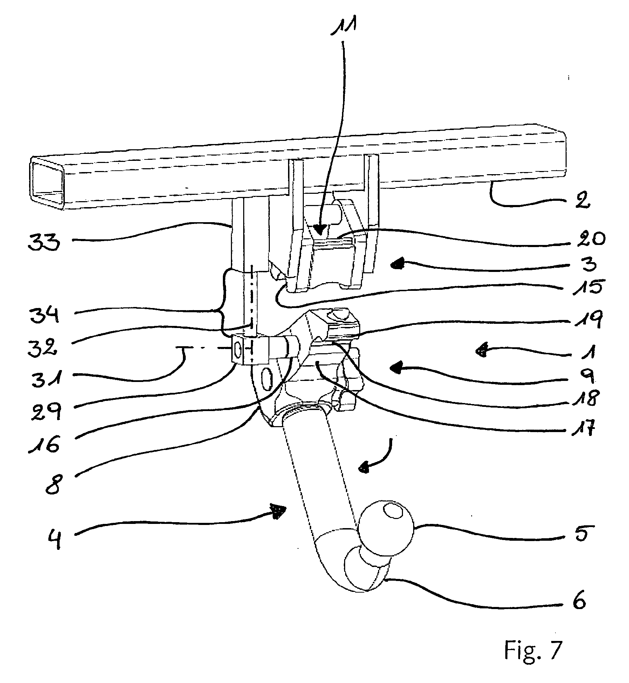

Die Gestaltung des Einsteckabschnitts 9 lässt sich am besten aus Figur 7 erkennen, in der die Kugelstange 4 in einer Losstellung dargestellt ist, in der sich der Einsteckabschnitt 9 vollständig außerhalb der Aufnahmeeinrichtung 3 befindet. Der sich zu seinem freien Ende hin verjüngende Einsteckabschnitt 9 ist im Querschnitt rechteckförmig bzw. quadratisch und weist in seiner der Kupplungskugel 5 zugewandten Oberfläche 17 eine Aussparung 18 auf, die zu dem zugeordneten freien Ende des Einsteckabschnitts 9 hin von einer Nase 19 begrenzt wird. Wie sich insbesondere aus der vergrößerten Darstellung gemäß Figur 5 ergibt, hintergreift die Nase 19 in der Betriebsstellung der Kugelstange 4 eine Anschlagfläche 20 am Rand des Vorderteils 14 des Aufnahmeabschnitts 11 der Aufnahmeeinrichtung 3. In der Betriebsstellung der Kugelstange 4 liegt des Weiteren ein an seinem freien Ende abgeflachter Keilschieber 21 mit seiner Klemmfläche 22 an dem Verbindungsbolzen 13 der Aufnahmeeinrichtung 3 an. Der als Verriegelungselement fungierende Keilschieber 21 wird dabei in axiale Richtung so weit aus seiner Lagerbohrung im Inneren des Einsteckabschnitts 9 der Kugelstange 4 herausgeschoben, bis der Einsteckabschnitt 9 sowohl mit der Nase 19 als auch der Klemmfläche 22 des Keilschiebers 21 klemmend an den gegenüber liegenden Flächen des Aufnahmeabschnitts 11 der Aufnahmeeinrichtung 3 anliegt und somit ein axiales Herausziehen der Kugelstange 4 verhindert ist. In der Betriebsstellung der Kugelstange 4 stützt sich diese darüber hinaus noch mit den beiden Zapfen 16 in den zugeordneten Aussparungen 15 in den Seitenteilen 12 des Aufnahmeabschnitts 11 ab. Auf diese Weise ist eine sichere und bei Verschleiß durch die Keilform des Keilschiebers 21 selbst nachstellende Fixierung des Einsteckabschnitts 9 der Kugelstange 4 in dem Aufnahmeabschnitt 11 der Aufnahmeeinrichtung 3 sichergestellt.

Die Betätigung des in seinem hinteren Bereich im Inneren des Einsteckabschnitts 9 mit einer Verzahnung versehenen Keilschiebers 21 erfolgt mit Hilfe eines Handrades 23, das auf einer Welle 24 in dem Winkelstück 8 der Kugelstange 4 gelagert ist. Die Welle 24 ist mit einem nicht sichtbaren Ritzel versehen, das mit dem verzahnten Bereich des Keilschiebers 21 in Eingriff steht. Der Keilschieber 21 ist mittels eines gleichfalls nicht sichtbaren Federelements in Richtung auf die in Figur 5 dargestellte Sperrstellung vorgespannt.

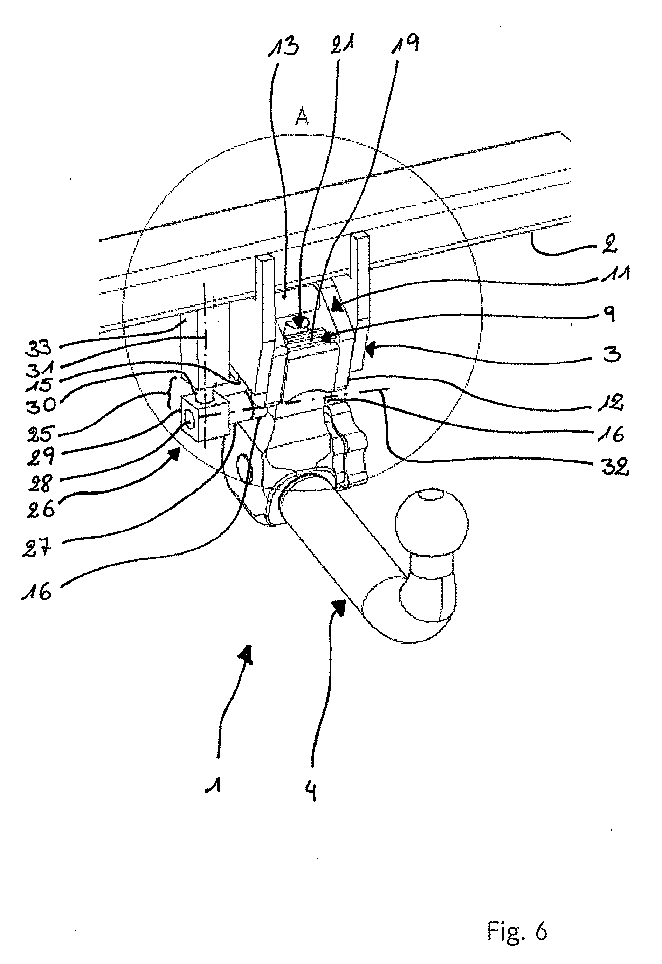

Soll die Kugelstange 4 aus der Betriebsstellung in die Los- bzw. später auch ihre Ruhestellung überführt werden, so ist zunächst das Handrad 23 zu betätigen, um das Verriegelungselement in Form des Keilschiebers 21 zurückzuziehen, bis dieser unterhalb des Verbindungsbolzens 13 gelangen kann, so dass die Nase 19 am Ende des Einsteckabschnitts 9 durch Verschwenken der Kugelstange 4 von der Anschlagfläche 20 zurückgezogen wird. In Figur 6 ist eine solche Position dargestellt, in der die Zapfen 16 bereits um einen Weg 25 aus den zugeordneten Aussparungen 15 in den Seitenteilen 12 des Aufnahmeabschnitts 11 der Aufnahmeeinrichtung 3 zurückgezogen sind.

Wie aus der in der in Figur 6 dargestellten Position ersichtlich ist, besteht zwischen der Kugelstange 4 und dem Fahrzeugteil 2 noch eine weitere ständige Verbindung in Form einer Verbindungseinrichtung 26. Diese besteht aus einem an den Zapfen 16 angeschweißten Verlängerungsstück 27, das mit seinem verjüngten Ende in eine Lagerbohrung 28 eines kubischen Körpers eines Drehgelenks 29 eingeführt ist. An die Oberseite des kubischen Körpers ist eine Stange 30 angeschweißt, deren Längsachse 31 in einem rechten Winkel zu der Längsachse 32 der Zapfen 16 sowie des Verlängerungsstücks 27 und damit auch der Drehachse des daran angeschlossenen Gelenks verläuft. Die Stange 30 ist in einer Lagerbohrung eines quaderförmigen Lagerkörpers 33 sowohl in axiale Richtung verschiebbar als auch um die Längsachse 31 drehbar gelagert, so dass ein Schiebe-Drehgelenk vorliegt. Der Lagerkörper 33 ist an dem Fahrzeugteil 2 befestigt, insbesondere damit verschweißt.

Die Verbindungseinrichtung 26 gestattet somit Bewegungen der Kugelstange 4 mit drei Freiheitsgraden, nämlich zum einen einer Drehbewegung um die Längsachse 32, einer Drehbewegung um die Längsachse 31 sowie einer axialen Verschiebung in Richtung der Längsachse 31.

Während die Kugelstange 4 in Figur 6 in einer Position dargestellt ist, in der der Keilschieber 21 gerade so weit zurückgezogen ist, dass die Nase 19 aus ihrer Arretierposition bewegt wurde, wobei sich der Einsteckabschnitt 9 um den Weg 25 aus dem Aufnahmeabschnitt 11 heraus bewegt hat, zeigt Figur 7 eine Position, in der zum einen eine weitere axiale Verschiebung stattgefunden hat, so dass der Lagerkörper 33 und das Drehgelenk 29 nunmehr um den Weg 34 voneinander entfernt sind. Darüber hinaus hat eine Verschwenkung der Kugelstange um die Längsachse 31 stattgefunden, nachdem der Einsteckabschnitt 9 vollständig aus dem Aufnahmeabschnitt 11 herausgezogen wurde. Die Kugelstange 4 und insbesondere der Kugelhals 6 sowie die Kupplungskugel 5 befinden sich gegenüber der Betriebsstellung in einer abgesenkten Position.

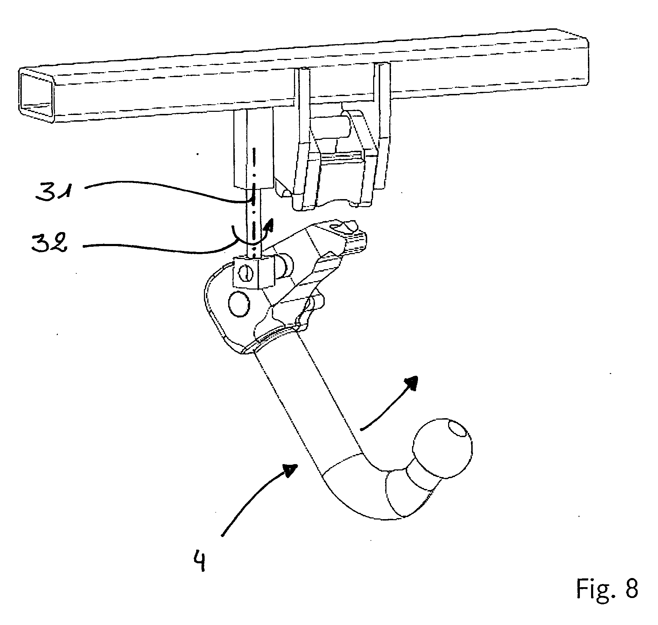

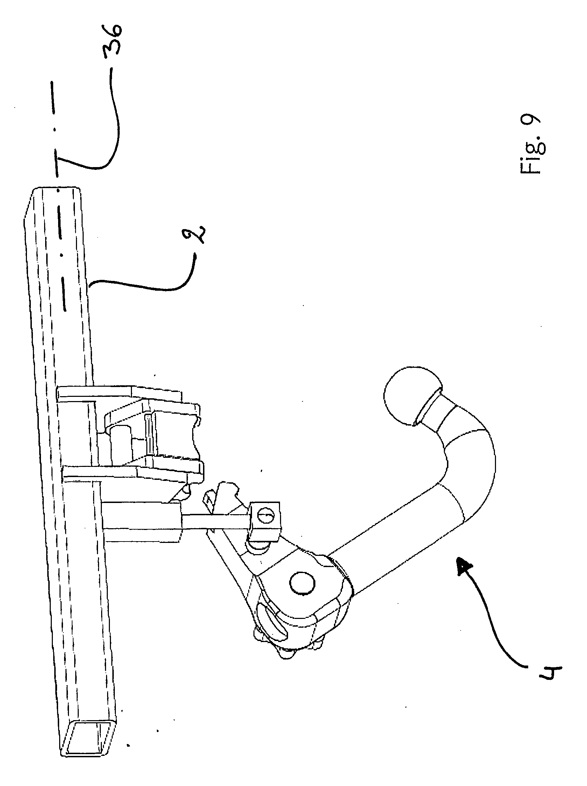

Bei der weiteren Überführung der Kugelstange 4 findet nunmehr eine Drehbewegung um die Längsachse 31 entsprechend dem in Figur 8 eingetragenen Pfeil 35 statt. Gemäß der Darstellung in Figur 9 hat die Kugelstange 4 durch Fortsetzung dieser Drehbewegung nunmehr eine Stellung erreicht, in der die durch sie aufgespannte Ebene parallel zu der Längsachse 36 des Fahrzeugteils 2 verläuft.

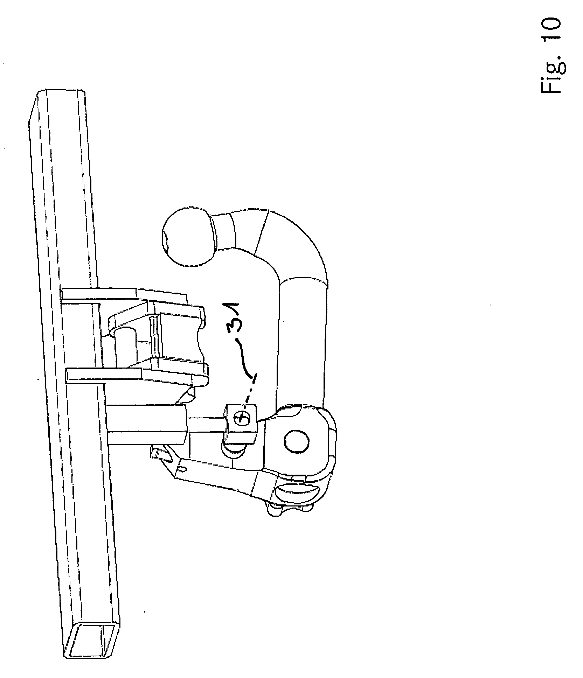

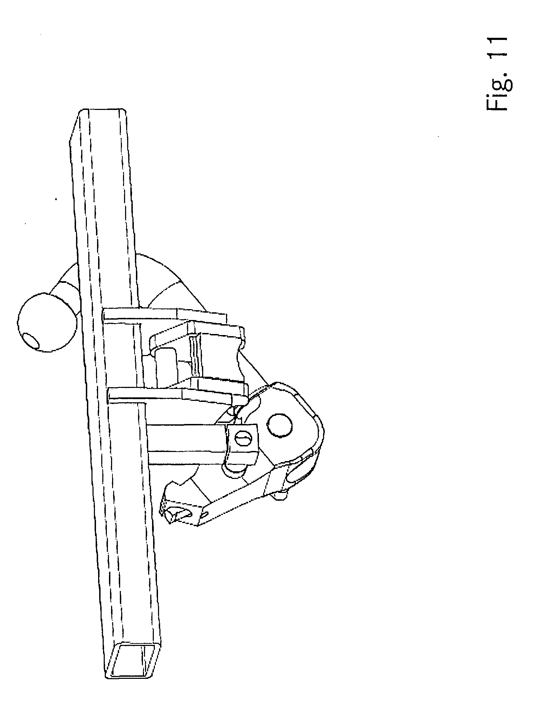

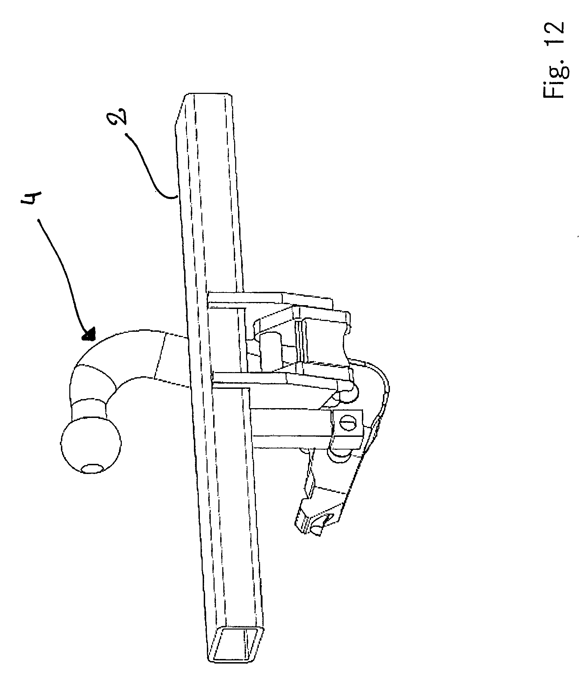

Figur 10 zeigt eine Position, in der die Kugelstange 4 durch eine Schwenkbewegung um die Längsachse 31 wieder aufwärts bewegt wurde, was über die in Figur 11 dargestellte Stellung soweit fortgesetzt wird, bis die in Figur 12 dargestellte Ruheposition eingenommen wird. In dieser Ruheposition wird die Kugelstange 4 mittels einer nicht dargestellten Arretiereinrichtung festgehalten, um unbeabsichtigte Positionsänderungen während des Fahrbetriebs zu verhindern. Die Arretiereinrichtung ist mit dem Fahrzeugteil 2 oder einem anderen Fahrzeugteil verbunden.

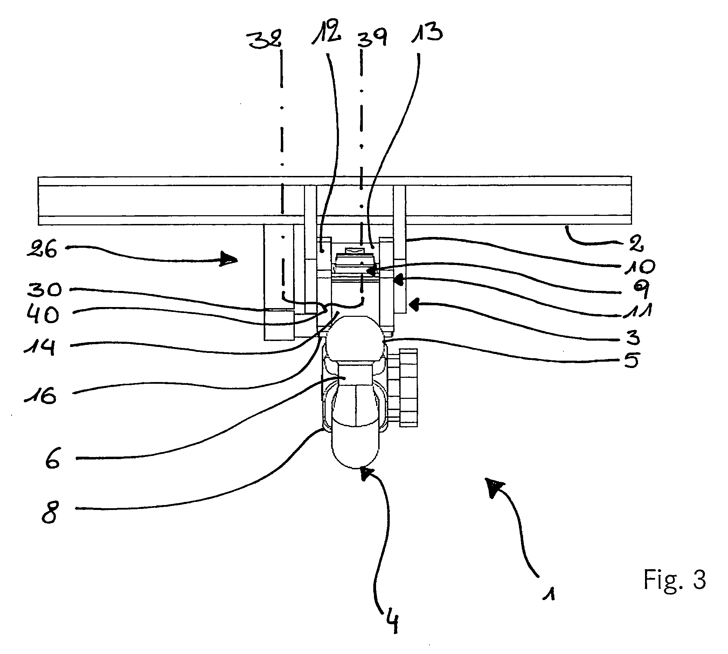

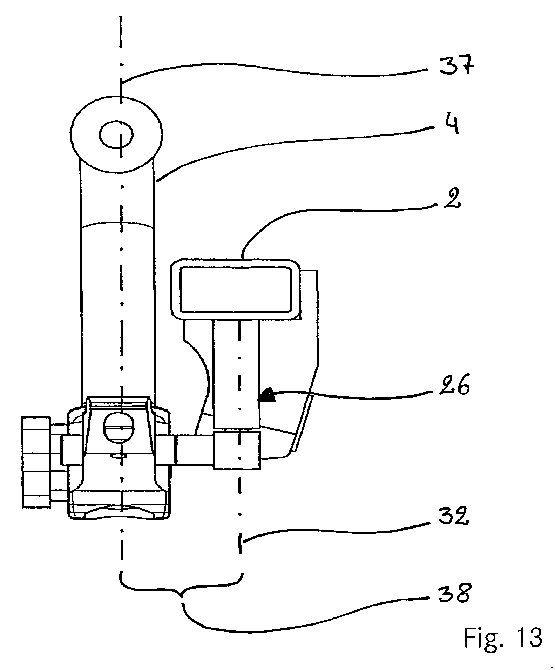

Figur 13 zeigt noch, dass sich die Kugelstange 4 in der Ruhestellung vollständig in einem Ruheraum hinter dem Fahrzeugteil 2 befindet und aufgrund eines in den Figuren nicht dargestellten, das Fahrzeugteil 2 verdeckenden Stoßfängers von der Rückseite des Fahrzeugs her nicht sichtbar ist. In Figur 13 ist erkennbar, dass sich eine durch die Linie 37 verkörperte Mittelebene der Kugelstange 4 in einem Abstand 38 von der Längsachse 32 der Stange 30 bzw. des Lagerkörpers 33 befindet. Dieser Abstand 38 entspricht auch dem in Figur 3 eingetragenen Abstand 40 zwischen der Längsachse 32 der Stange 30 und einer Linie 39, die neben der Mittelebene der Kugelstange 4 auch die Mittelebene der Aufnahmeeinrichtung 3 bzw. deren Aufnahmeabschnitts 11 verkörpert. Es findet somit bei der erfindungsgemäßen Anhängekupplung 1 gerade keine Drehung um eine in der Mittelebene der Kugelstange 4 bzw. Aufnahmeeinrichtung 3 liegende Achse statt, sondern eine Drehung um eine vertikale Längsachse 32, die seitlich versetzt zu der Ebene der Kugelstange 4in einem Abstand 40 angeordnet ist.

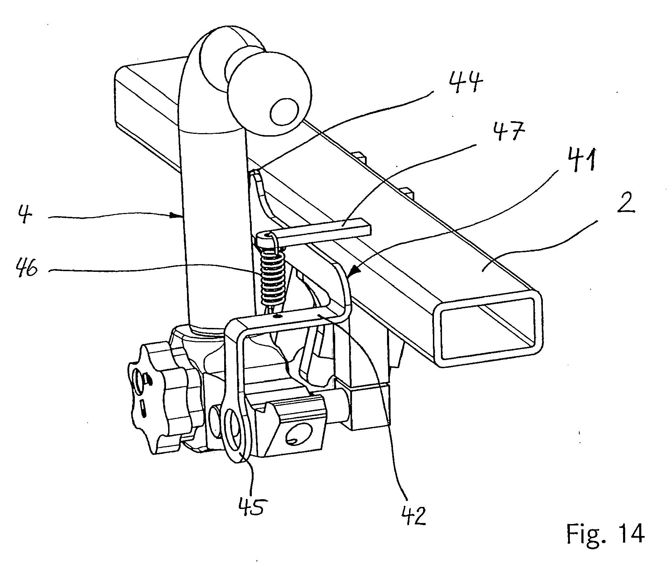

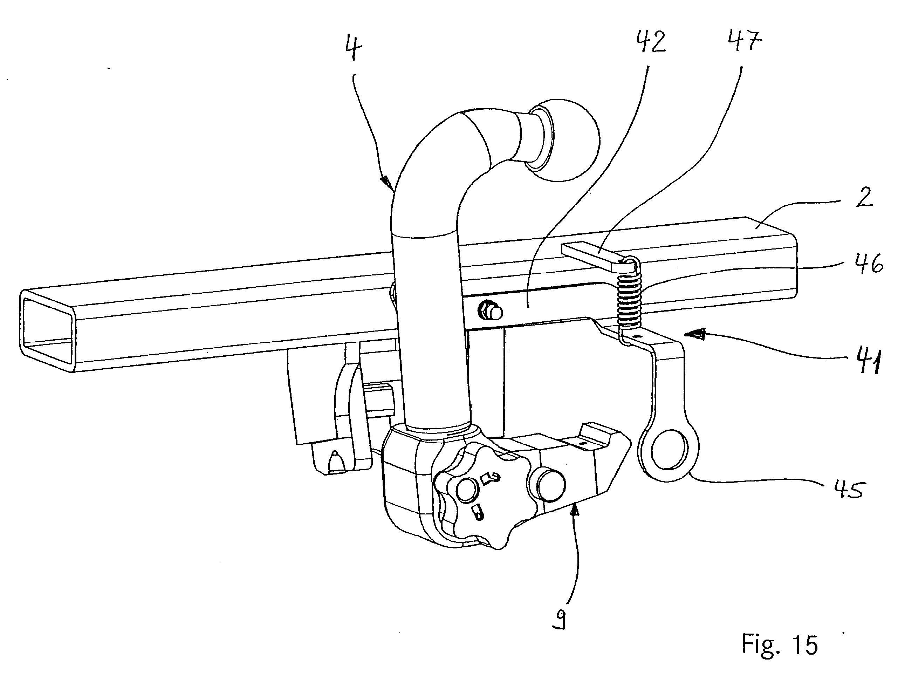

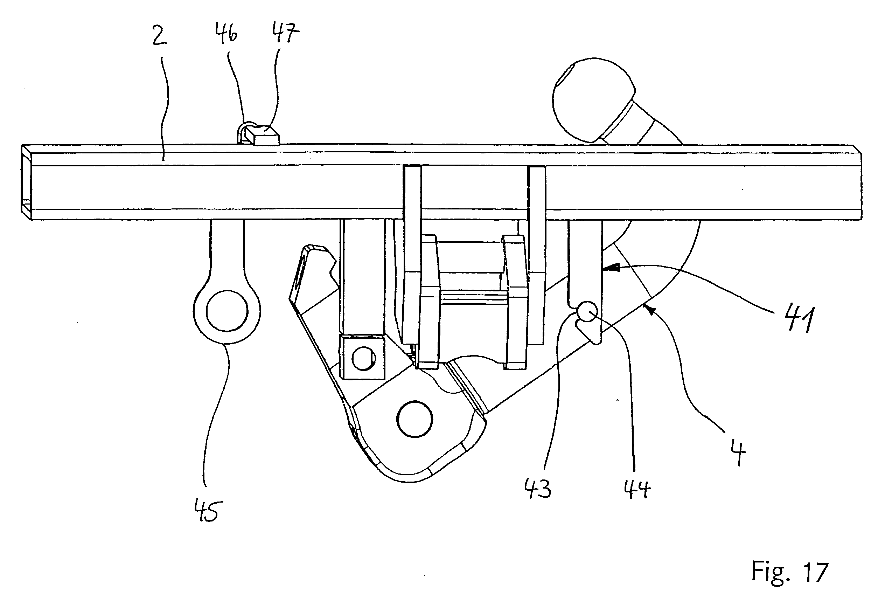

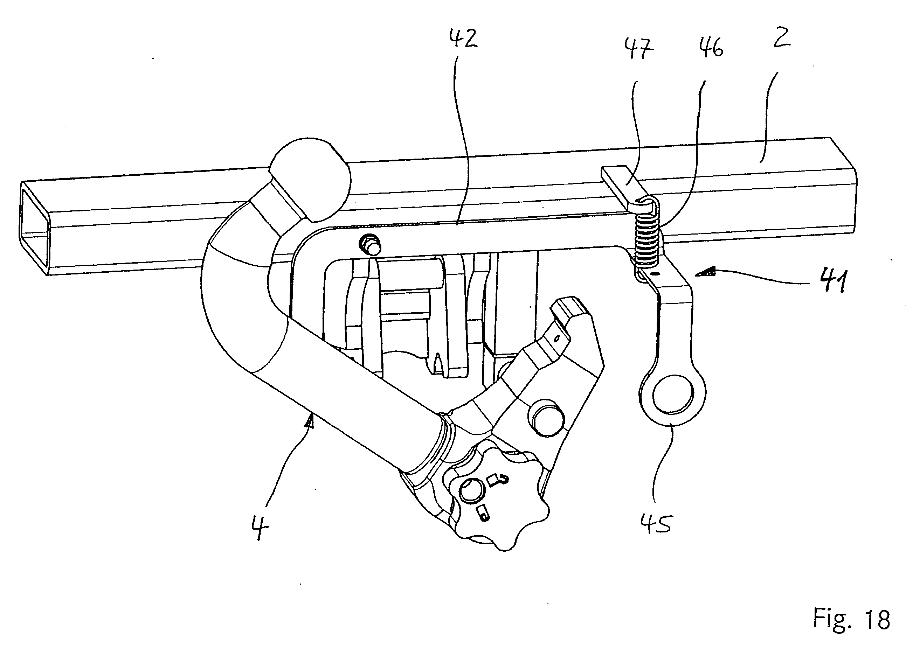

Während in den Figuren 1 bis 13 die Anhängekupplung 1 der Übersichtlichkeit halber ohne die Bauteile einer Arretiereinrichtung dargestellt ist, ist die Arretiereinrichtung 41 in den Figuren 14 bis 16 sowie der weiteren Figuren 17 und 18 dargestellt und wird im Folgenden näher erläutert:

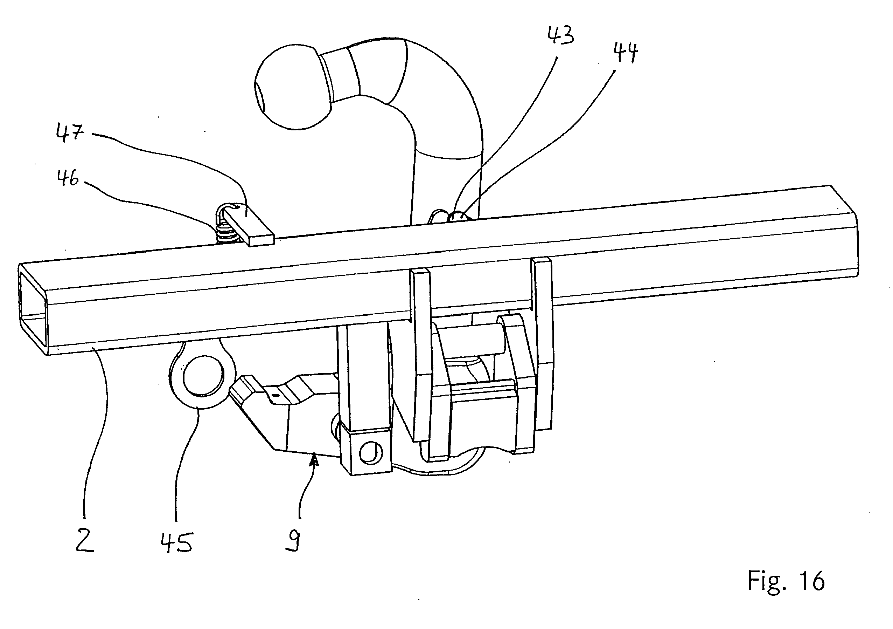

Die Figuren 14 bis 16 zeigen eine erste Ausführungsform der Arretiereinrichtung 41, wobei sich die Kugelstange in diesen Figuren in der Ruhestellung befindet, in der sie mit der Längsachse des ersten geraden Abschnitts der Kugelstange vertikal, d.h. mit der Längsachse des Einsteckabschnitts 9 im Wesentlichen horizontal ausgerichtet ist. Die Arretiereinrichtung 41 umfasst einen Arretierhebel 42, der aus einem mehrfach abgewinkelten Blech besteht und mit Hilfe einer in das Fahrzeugteil 2 (Quertraverse) eingedrehten Schraube gelenkig um die von der Schraube gebildete Achse gelagert ist. Wie insbesondere aus den Figuren 14 und 16 ersichtlich ist, besitzt der Arretierhebel 42 an seinem dem Kugelhals 6 zugewandten Ende eine nach oben offene Ausnehmung 43, die dem Ende des Arretierhebels 42 eine gabelförmige Gestalt gibt. In der in den Figuren 14 bis 16 gezeigten Ruhestellung der Kugelstange 4 wirkt diese Ausnehmung 43 mit einem klemmend in die Kugelstange 4 eingesetzten Arretierstift 44 zusammen. In der Ruhestellung rastet dieser Arretierstift 44 in die Ausnehmung 43 ein, so dass sich die Kugelstange 4 nicht aus der Ruhestellung heraus bewegen kann und somit während Zeiten des Nichtgebrauchs gesichert ist. Diese Sicherung erfolgt mit Hilfe einer Druckfeder 46, die zwischen einem mit dem Fahrzeugteil 2 verbundenen Federhalter 47 und einem abgewinkelten horizontal verlaufenden Teils des Arretierhebels 42 zusammenwirkt. Diese Druckfeder ist bestrebt, das ihr zugeordnete Ende des Arretierhebels 42 nach unten und somit das gegenüber liegende gabelförmige Ende des Arretierhebels 42 mit der dort befindlichen Ausnehmung 43 nach oben zu drücken, so dass eine seitliche Bewegung des in der Ausnehmung 43 fixierten Arretierstifts 44 zusammen mit der Kugelstange 4 nicht möglich ist. Eine Freigabe des Arretierstifts 44 und damit der Kugelstange 4 ist erst dann möglich, wenn der Arretierhebel 42 durch Drücken an dem als Handhabe 45 ausgebildeten Ende des Arretierhebels 44 gegen die Kraft der Druckfeder 46 nach oben geschwenkt wird und somit den Arretierstift 44 freigibt, woraufhin sich die Kugelstange 4 schwerkraftbedingt nach unten in die Losstellung verschwenkt. Aufgrund der Druckfeder 46 erfolgt ein Einrasten des Arretierstifts 44 in die Ausnehmung 43 des Arretierhebels 42 beim Überführen der Kugelstange 4 in die Ruhestellung automatisch.
Die Figuren 17 und 18 zeigen eine Anhängekupplung 1 mit alternativer Ausführung der Arretiereinrichtung 41. In der Ruhestellung befindet sich die Kugelstange 4 in einer Schrägstellung, wobei sich sowohl der Einsteckabschnitt als auch der geradlinige Abschnitt der Kugelstange 4 ungefähr unter einem Winkel von 45° zur Horizontalen erstrecken. Eine solche Stellung benötigt weniger Platz für die Kugelstange 4 als die zuvor beschriebene Ruhestellung mit vertikaler Ausrichtung des Kugelstangenabschnitts. Der Arretierhebel 42 der Variante gemäß den Figuren 17 und 18 wird mittels einer Zugfeder in der Arretierstellung gehalten, wohingegen das Lösen der Arretiereinrichtung in diesem Fall durch ein Ziehen der Handhabe 45 nach unten erfolgt.

### Bezugszeichenliste

- 1: Anhängekupplung
- 2: Fahrzeugteil
- 3: Aufnahmeeinrichtung
- 4: Kugelstange
- 5: Kupplungskugel
- 6: Kugelhals
- 7: Abschnitt
- 8: Winkelstück
- 9: Einsteckabschnitt
- 10: Wange
- 11: Aufnahmeabschnitt
- 12: Seitenteil
- 13: Verbindungsbolzen
- 14: Vorderteil
- 15: Aussparung
- 16: Zapfen
- 17: Oberfläche
- 18: Aussparung
- 19: Nase
- 20: Anschlagfläche
- 21: Keilschieber
- 22: Klemmfläche
- 23: Handrad
- 24: Welle
- 25: Weg
- 26: Verbindungseinrichtung
- 27: Verlängerungsstück
- 28: Lagerbohrung
- 29: Drehgelenk
- 30: Stange
- 31: Längsachse
- 32: Längsachse
- 33: Lagerkörper
- 34: Weg
- 35: Pfeil
- 36: Längsachse
- 37: Linie
- 38: Abstand
- 39: Linie
- 40: Abstand
- 41: Arretiereinrichtung
- 42: Arretierhebel
- 43: Ausnehmung
- 44: Arretierstift
- 45: Handhabe
- 46: Druckfeder
- 47: Federhalter

## Patentansprüche

1. Anhängekupplung (1) mit einer mit einem Fahrzeugteil (2) verbindbaren Aufnahmeeinrichtung (3) und einer Kugelstange (4), die an einem Ende mit einer Kupplungskugel (5) zur Ankopplung eines Kupplungselements eines Anhängers und an einem gegenüberliegenden Ende mit einem Einsteckabschnitt (9) versehen ist, der in einen Aufnahmeabschnitt (11) der Aufnahmeeinrichtung (3) einführbar und darin in einer Betriebsstellung der Kugelstange (4) mittels eines in seiner Sperrstellung befindlichen Verriegelungselements so arretierbar ist, dass im Anhängebetrieb des Fahrzeugs auftretende Kräfte und Momente von der Kugelstange (4) über die Aufnahmeeinrichtung (3) in das Fahrzeugteil (2) übertragbar sind, wobei die Kugelstange (4) nach Überführung des Verriegelungselements von der Sperrstellung in eine Freigabestellung von der Betriebsstellung in eine Losstellung überführbar ist, in der der Einsteckabschnitt (9) der Kugelstange (4) vollständig aus dem Aufnahmeabschnitt (11) der Aufnahmeeinrichtung (3) entfernt ist, wobei die Anhängekupplung eine Verbindungseinrichtung (26) aufweist, die zusätzlich zu der nur in Betriebsstellung wirksamen Aufnahmeeinrichtung (3) eine ständige Verbindung zwischen der Kugelstange (4) und dem Fahrzeugteil (2) bildet und die eine Überführung der Kugelstange (4) von der Losstellung in eine Ruhestellung erlaubt, in der die Kugelstange (4) mittels einer Arretiereinrichtung (41) arretierbar und aus der heraus die Kugelstange (4) nach Lösen der Arretiereinrichtung (41) wieder in die Losstellung rücküberführbar ist, dadurch gekenntzeichnet, dass der Einsteckabschnitt (9) der in ihrer Ruhestellung befindlichen Kugelstange (4) außerhalb des Aufnahmeabschnitts (11) der Aufnahmeeinrichtung (3) angeordnet ist,

2. Anhängekupplung (1) nach Anspruch 1, **dadurch gekennzeichnet, dass** in der Losstellung der Kugelstange (4) zwischen dieser und der Aufnahmeeinrichtung (3) - abgesehen von der Verbindungseinrichtung (26) - keine Verbindung mehr besteht und eine Stirnseite der Kugelstange (4) an deren dem Einsteckabschnitt (9) zugeordneten Ende vollständig aus der Aufnahmeeinrichtung (3) herausgezogen ist.

3. Anhängekupplung (1) nach Anspruch 1 oder 2, **dadurch gekennzeichnet, dass** die Verbindungseinrichtung (26) eine Drehung der Kugelstange (4) um zwei unter einem Winkel zueinander verlaufende Achsen und eine Verschiebung der Kugelstange (4) in zumindest eine Richtung erlaubt.

4. Anhängekupplung (1) nach einem der Ansprüche 1 bis 3, **dadurch gekennzeichnet, dass** die Verbindungseinrichtung (26) eine Drehung der Kugelstange (4) um eine Achse (31) erlaubt, die parallel zu dem Einsteckabschnitt (9) der Kugelstange (4) oder dem Aufnahmeabschnitt (11) der Aufnahmeeinrichtung (3) verläuft und einen Abstand zu einer Längsmittelachse des Einsteckabschnitts (9) oder des Aufnahmeabschnitts (11) aufweist.

5. Anhängekupplung (1) nach einem der Ansprüche 1 bis 4, **dadurch gekennzeichnet, dass** die Kugelstange (4) mit einem senkrecht von dieser abstehenden und in Betriebsstellung der Kugelstange (4) vor dem Einsteckabschnitt (9) angeordneten Zapfen (16) versehen ist, der über ein Drehgelenk (29) an eine Stange (30) gekoppelt ist, die senkrecht zu dem Zapfen (16) verläuft und in einem Schiebe-Drehgelenk an das Fahrzeugteil (2) gekoppelt ist.

6. Anhängekupplung (1) nach Anspruch 5, **dadurch gekennzeichnet, dass** der Zapfen (16) als Anschlagelement wirkt, das die Einführbewegung des Einsteckabschnitts (9) der Kugelstange (4) in den Aufnahmeabschnitt (11) der Aufnahmeeinrichtung (3) begrenzt.

7. Anhängekupplung (1) nach einem der Ansprüche 4 bis 6, **dadurch gekennzeichnet, dass** sich die Längsmittelachse des Einsteckabschnitts (9) der Kugelstange (4) in der Ruhestellung einerseits und in der Betriebsstellung andererseits nicht schneiden.

8. Anhängekupplung (1) nach einem der Ansprüche 1 bis 7, **dadurch gekennzeichnet, dass** mittels der Verbindungseinrichtung (26) in der Betriebsstellung der Kugelstange (4) keine die Bewegung der Kugelstange (4) von der Betriebsstellung in die Losstellung verhindernde Kräfte und/oder Momente in das Fahrzeugteil (2) übertragbar sind.

9. Anhängekupplung (1) nach einem der Ansprüche 1 bis 8, **dadurch gekennzeichnet, dass** die Aufnahmeeinrichtung (3) auf ihrer der Kupplungskugel (5) abgewandten Rückseite derart offen ausgeführt ist, dass der Einsteckabschnitt (9) nach Überführung des Verriegelungselements (21) von der Sperrstellung in die Freigabestellung und einem eventuellen Herausziehen des Einsteckabschnitts (9) aus dem Aufnahmeabschnitt (11) um einen Weg von maximal 20 mm in die Ruhestellung überführbar ist, vorzugsweise durch eine Schwenkbewegung um eine neben der Aufnahmeeinrichtung (3) befindliche vertikale Achse (31).

10. Anhängekupplung (1) nach einem der Ansprüche 1 bis 9, **gekennzeichnet durch** ein Federelement, das die in der Ruhestellung befindliche Kugelstange (4) in Richtung auf die Losstellung und/oder die Betriebsstellung oder die in der Losstellung befindliche Kugelstange (4) in Richtung auf die Betriebsstellung und/oder Ruhestellung vorspannt.

11. Anhängekupplung (1) nach Anspruch 10, **gekennzeichnet durch** eine innerhalb eines Lagerkörpers (33) koaxial zu der Achse (31) angeordnete Schraubenfeder, die eine Stange (30) mit einem daran angeordneten Drehgelenk (29) in Richtung auf den Lagerkörper (33) zu oder davon weg vorspannt und gleichzeitig eine Verschwenkung der Kugelstange (4) um die Achse (31) versucht auszuführen, um die Kugelstange (4) in eine zu einer Fahrzeuglängsachse parallele Stellung zu überführen oder die Kugelstange (4) aus einer zu der Fahrzeuglängsachse parallelen Stellung heraus zu schwenken.

12. Anhängekupplung (1) nach einem der Ansprüche 1 bis 11, **dadurch gekennzeichnet, dass** die Arretiereinrichtung (41) für die in ihrer Ruhestellung befindlichen Kugelstange (4) in einem Abstand von der Aufnahmeeinrichtung (3) für die in ihrer Betriebsstellung befindlichen Kugelstange (4) angeordnet ist.

13. Anhängekupplung (1) nach einem der Ansprüche 1 bis 12, **dadurch gekennzeichnet, dass** die Arretiereinrichtung (41) an dem Einsteckabschnitt (9) der Kugelstange (4) oder an einem zwischen dem Einsteckabschnitt (9) und einer Kupplungskugel (5) angeordneten Kugelhals (6) angreift.

14. Anhängekupplung (1) nach einem der Ansprüche 1 bis 13, **dadurch gekennzeichnet, dass** die Arretiereinrichtung (41) ein schwenkbar an einem Fahrzeugteil (2) gelagerter Arretierhebel ist, der eine Ausnehmung (43) besitzt, die in der Ruhestellung der Kugelstange (4) mit einem mit der Kugelstange (4) verbundenen Arretierstift (44) zusammenwirkt, wobei vorzugsweise die Arretiereinrichtung (41) durch Verschwenken des mit einer Handhabe (45) versehenen Arretierhebels (42) lösbar ist, wodurch die Kugelstange (4) von der Ruhestellung in Richtung auf die Losstellung rücküberführbar ist.

15. Verbindungseinrichtung (26) zur Verbindung einer Kugelstange (4) einer Anhängekupplung (1) mit einem Fahrzeugteil (2), wobei die Kugelstange (4) an einem Ende mit einer Kupplungskugel (5) zur Ankopplung eines Kupplungselements eines Anhängers und an einem gegenüber liegenden Ende mit einem Einsteckabschnitt (9) versehen ist, der in einen Aufnahmeabschnitt (11) der Aufnahmeeinrichtung (3) einführbar und darin in einer Betriebsstellung der Kugelstange (4) mittels eines in seiner Sperrstellung befindlichen Verriegelungselements (21) so arretierbar ist, dass im Anhängebetrieb des Fahrzeugs auftretende Kräfte und Momente von der Kugelstange (4) über die Aufnahmeeinrichtung (3) in das Fahrzeugteil (2) übertragbar sind, wobei die Kugelstange (4) nach Überführung des Verriegelungselements von der Sperrstellung in eine Freigabestellung von der Betriebsstellung in eine Losstellung überführbar ist, in der der Einsteckabschnitt (9) der Kugelstange (4) vollständig aus dem Aufnahmeabschnitt (11) der Aufnahmeinrichtung (3) entfernt ist, wobei die Verbindungseinrichtung (26) zusätzlich zu der nur in der Betriebsstellung wirksamen Aufnahmeeinrichtung (3) eine ständige Verbindung zwischen der Kugelstange (4) und dem Fahrzeugteil (2) bildet und eine Überführung der Kugelstange (4) von der Losstellung in eine Ruhestellung erlaubt, in der die Kugelstange (4) mittels einer Arretiereinrichtung arretierbar und aus der heraus die Kugelstange (4) nach Lösen der Arretiereinrichtung wieder in die Losstellung rücküberführbar ist, **dadurch gekennzeichnet, dass** der Einsteckabschnitt (9) der in ihrer Ruhestellung befindlichen Kugelstange (4) außerhalb des Aufnahmeabschnitts (11) der Aufnahmeeinrichtung (3) angeordnet ist.

## Claims

1. A trailer coupling (1) having a receiving device (3) connectable to a vehicle part (2) and a ball rod (4) which is provided at one end with a coupling ball (5) for coupling a coupling element of a trailer and at an opposite end with an insertion portion (9) which can be introduced into a receiving portion (11) of the receiving device (3) and can thereby be locked therein in an operating position of the ball rod (4) by means of a locking element located in its closed position, such that forces and moments occurring when the vehicle is operating with the trailer can be transmitted from the ball rod (4) via the receiving device (3) into the vehicle part (2), wherein the ball rod (4) can be transferred from the operating position to a release position when the locking element has been moved from the closed position into a release position, in which release position the insertion portion (9) of the ball rod (4) is completely removed from the receiving portion (11) of the receiving device (3), wherein the trailer coupling exhibits a connecting device (26) which creates a constant connection between the ball rod (4) and the vehicle part (2), in addition to the receiving device (3) which is only effective in the operating position, and allows the ball rod (4) to be transferred from the release position to a neutral position in which the ball rod (4) can be locked by means of a locking device (41) and from which the ball rod (4) can be moved back into the release position following release of the locking device (41), **characterized in that** the insertion portion (9) of the ball rod (4) located in its neutral position is arranged outside the receiving portion (11) of the receiving device (3).

2. The trailer coupling (1) according to claim 1, **characterized in that** in the release position of the ball rod (4) there no longer exists a connection between said ball rod and the receiving device (3) - apart from the connecting device (26) - and a front side of the ball rod (4) at the end thereof assigned to the insertion portion (9) is completely removed from the receiving device (3).

3. The trailer coupling (1) according to claim 1 or 2, **characterized in that** the connecting device (26) allows rotation of the ball rod (4) about two axes running at an angle to one another and displacement of the ball rod (4) in at least one direction.

4. The trailer coupling (1) according to one of the claims 1 to 3, **characterized in that** the connecting device (26) allows rotation of the ball rod (4) about an axis (31) which runs parallel to the insertion portion (9) of the ball rod (4) or the receiving portion (11) of the receiving device (3) and is spaced apart from a longitudinal central axis of the insertion portion (9) or of the receiving portion (11).

5. The trailer coupling (1) according to one of the claims 1 to 4, **characterized in that** the ball rod (4) is provided with a journal (16) which projects perpendicularly from said ball rod and is arranged in front of the insertion portion (9) in the operating position of the ball rod (4), said journal being coupled via a swivel joint (29) to a rod (30) which runs perpendicularly to the journal (16) and is coupled to the vehicle part (2) in a sliding swivel joint.

6. The trailer coupling (1) according to claim 5, **characterized in that** the journal (16) acts as a stop element, which limits the introductory movement of the insertion portion (9) of the ball rod (4) into the receiving portion (11) of the receiving device (3).

7. The trailer coupling (1) according to one of the claims 4 to 6, **characterized in that** the longitudinal central axis of the insertion portion (9) of the ball rod (4) in the neutral position, on the one hand, and in the operating position, on the other, do not intersect.

8. The trailer coupling (1) according to one of the claims 1 to 7, **characterized in that** by means of the connecting device (26) no forces and/or moments preventing movement of the ball rod (4) from the operating position into the release position can be transmitted into the vehicle part (2) in the operating position of the ball rod (4).

9. The trailer coupling (1) according to one of the claims 1 to 8, **characterized in that** the receiving device (3) has an open design on its rear side facing away from the coupling ball (5), such that following movement of the locking element (21) from the closed position into the release position and possible removal of the insertion portion (9) from the receiving portion (11), the insertion portion (9) can be transferred by a distance of maximum 20 mm into the neutral position, preferably through a pivoting movement about a vertical axis (31) located alongside the receiving device (3).

10. The trailer coupling (1) according to one of the claims 1 to 9, **characterized by** a spring element which pretensions the ball rod (4) located in the neutral position in the direction of the release position and/or the operating position or pretensions the ball rod (4) in the direction of the operating position and/or the neutral position.

11. The trailer coupling (1) according to claim 10, **characterized by** a helical spring arranged within a bearing body (33) coaxially to the axis (31), which pretensions a rod (30) with a swivel joint (29) arranged thereon in the direction of the bearing body (33) or away therefrom and at the same time tries to execute a pivot of the ball rod (4) about the axis (31), in order to transfer the ball rod (4) into a position parallel to a vehicle longitudinal axis or to pivot the ball rod (4) out of a position parallel to the vehicle longitudinal axis.

12. The trailer coupling (1) according to one of the claims 1 to 11, **characterized in that** the locking device (41) for the ball rod (4) located in its neutral position is arranged at a distance from the receiving device (3) for the ball rod (4) located in its operating position.

13. The trailer coupling (1) according to one of the claims 1 to 12, **characterized in that** the locking device (41) makes contact with the insertion portion (9) of the ball rod (4) or a ball neck (6) arranged between the insertion portion (9) and a coupling ball (5).

14. The trailer coupling (1) according to one of the claims 1 to 13, **characterized in that** the locking device (41) is a locking lever pivotably mounted on a vehicle part (2), said lever having a recess (43) which cooperates with a locking pin (44) connected to the ball rod (4) in the neutral position of the ball rod (4), wherein the locking device (41) is preferably detachable by pivoting the locking lever (42) provided with a handle (45), as a result of which the ball rod (4) can be moved back from the neutral position in the direction of the release position.

15. A connecting device (26) for connecting a ball rod (4) of a trailer coupling (1) to a vehicle part (2), wherein, vehicle part (2) and a ball rod (4) which is provided at one end with a coupling ball (5) for coupling a coupling element of a trailer and at an opposite end with an insertion portion (9) which can be introduced into a receiving portion (11) of the receiving device (3) and can thereby be locked therein in an operating position of the ball rod (4) by means of a locking element (21) located in its closed position, such that forces and moments occurring when the vehicle is operating with the trailer can be transmitted from the ball rod (4) via the receiving device (3) into the vehicle part (2), wherein the ball rod (4) can be transferred from the operating position to a release position when the locking element has been moved from the closed position into a release position, in which release position the insertion portion (9) of the ball rod (4) is completely removed from the receiving portion (11) of the receiving device (3), wherein the connecting device (26) creates a constant connection between the ball rod (4) and the vehicle part (2), in addition to the receiving device (3) which is only effective in the operating position, and allows the ball rod (4) to be transferred from the release position to a neutral position in which the ball rod (4) can be locked by means of a locking device (41) and from which the ball rod (4) can be moved back into the release position following release of the locking device (41), **characterized in that** the insertion portion (9) of the ball rod (4) located in its neutral position is arranged outside the receiving portion (11) of the receiving device (3).

## Revendications

1. Dispositif d'attelage (1) avec un système de logement (3) susceptible d'être relié avec une partie d'un véhicule (2) et une barre de boule d'attelage (4) qui sur une extrémité est munie d'une boule d'attelage (5) pour accoupler un élément d'attelage d'une remorque et sur une extrémité opposée est munie d'une partie insérable (9) qui peut s'introduire dans une partie de logement (11) du système de logement (3) et qui peut y être bloquée dans une position de service de la barre de boule d'attelage (4) au moyen d'un élément de verrouillage se trouvant dans sa position de blocage, de telle sorte que des forces et des moments naissant en position d'attelage du véhicule soient transmissibles par l'intermédiaire du système de logement (3), de la barre de boule d'attelage (4) dans la partie de véhicule (2), après passage de l'élément de verrouillage de la position de blocage dans une position de libération, la barre de boule d'attelage (4) pouvant être passée de la position de service dans une position de relâchement, dans laquelle la partie insérable (9) de la barre de boule d'attelage (4) est totalement retirée de la partie de logement (11) du système de logement (3), le dispositif d'attelage comportant un système de liaison (26), qui en supplément du système de logement (3) uniquement efficace en position de service, assure une liaison permanente entre la barre de boule d'attelage (4) et la partie de véhicule (2) et qui permet un passage de la barre de boule d'attelage (4) de la position de relâchement dans une position de repos, dans laquelle la barre de boule d'attelage (4) est blocable au moyen d'un système de blocage (41) et de laquelle, après relâchement du système de blocage (41), la barre de boule d'attelage (4) peut être repassée en position de relâchement, **caractérisé en ce que** la partie insérable (9) de la barre de boule d'attelage (4) se trouvant en position de repos est disposée à l'extérieur de la partie de logement (11) du système de logement (3).

2. Dispositif d'attelage (1) selon la revendication 1, **caractérisé en ce que** dans la position de relâchement de la barre de boule d'attelage (4), entre cette dernière et le système de logement (3) (à l'exception du système de liaison (26), il n'existe plus aucune liaison et une face frontale de la barre de boule d'attelage (4) est totalement sortie du système de logement (3) sur l'extrémité de cette dernière qui est associée à la partie insérable (9).

3. Dispositif d'attelage (1) selon la revendication 1 ou la revendication 2, **caractérisé en ce que** le système de liaison (26) permet une rotation de la barre de boule d'attelage (4) autour de deux axes s'étendant l'un par rapport à l'autre autour d'un angle et un déplacement de la barre de boule d'attelage (4) dans au moins une direction.

4. Dispositif d'attelage (1) selon l'une quelconque des revendications 1 à 3, **caractérisé en ce que** le système de liaison (26) permet une rotation de la barre de boule d'attelage (4) autour d'un axe (31) qui s'étend à la parallèle de la partie insérable (9) de la barre de boule d'attelage (4) ou de la partie de logement (11) du système de logement (3) et qui présente un écart par rapport à un axe médian longitudinal de la partie insérable (9) ou de la partie de logement (11).

5. Dispositif d'attelage (1) selon l'une quelconque des revendications 1 à 4, **caractérisé en ce que** la barre de boule d'attelage (4) est munie d'un tenon (16) débordant à la perpendiculaire par rapport à cette dernière et qui en position de service de la barre de boule d'attelage (4) est disposé à l'avant de la partie insérable (9), qui par l'intermédiaire d'une articulation rotative (29) est accouplé à une barre (30) qui s'étend à la perpendiculaire du tenon (16) et qui dans une articulation rotoïde coulissante est accouplé à la partie de véhicule (2).

6. Dispositif d'attelage (1) selon la revendication 5, **caractérisé en ce que** le tenon (16) fait effet d'élément de butée qui limite le mouvement d'introduction de la partie insérable (9) de la barre de boule d'attelage (4) dans la partie de logement (11) du système de logement (3).

7. Dispositif d'attelage (1) selon l'une quelconque des revendications 4 à 6, **caractérisé en ce que** l'axe médian longitudinal de la partie insérable (9) de la barre de boule d'attelage (4) ne se recoupent pas en position de repos d'une part et en position de service d'autre part.

8. Dispositif d'attelage (1) selon l'une quelconque des revendications 1 à 7, **caractérisé en ce qu'**en position de service de la barre de boule d'attelage (4), aucune force et/ou aucun moment empêchant le déplacement de la barre de boule d'attelage (4) de la position de service dans la position de relâchement ne sont transmissibles dans la partie du véhicule (2) au moyen du système de liaison (26).

9. Dispositif d'attelage (1) selon l'une quelconque des revendications 1 à 8, **caractérisé en ce que** sur sa face arrière opposée à la boule d'attelage (5), le système de logement (3) est réalisé en version ouverte de telle sorte qu'après le passage de l'élément de verrouillage (21) de la position de blocage dans la position de libération et un éventuel retrait de la partie insérable (9) hors de la partie de logement (11) d'une course d'un maximum de 20 mm, la partie insérable (9) peut être passée dans la position de repos, de préférence par un mouvement de pivotement autour d'un axe vertical (31) se trouvant à côté du système de logement (3).

10. Dispositif d'attelage (1) selon l'une quelconque des revendications 1 à 9, **caractérisé par** un élément à ressort qui précontraint la barre de boule d'attelage (4) se trouvant en position de repos en direction de la position de relâchement et/ou de la position de service ou la barre de boule d'attelage (4) se trouvant en position de relâchement en direction de la position de service et/ou de la position de repos.

11. Dispositif d'attelage (1) selon la revendication 10, **caractérisé par** un ressort cylindrique disposé à l'intérieur d'un palier (33), de manière coaxiale à l'axe (31), qui précontraint une barre (30) avec une articulation rotative (29) disposée sur cette dernière en direction du palier (33) ou loin de ce dernier et qui simultanément tente de réaliser un pivotement de la barre de boule d'attelage (4) autour de l'axe (31) pour faire passer la barre de boule d'attelage (4) dans une position parallèle à l'axe longitudinal du véhicule ou pour faire pivoter la barre de boule d'attelage (4) hors d'une position parallèle à l'axe longitudinal du véhicule.

12. Dispositif d'attelage (1) selon l'une quelconque des revendications 1 à 11, **caractérisé en ce que** le système de blocage (41) pour la barre de boule d'attelage (4) se trouvant dans sa position de repos est disposé avec un écart par rapport au système de logement (3) pour la barre de boule d'attelage (4) se trouvant dans sa position de service.

13. Dispositif d'attelage (1) selon l'une quelconque des revendications 1 à 12, **caractérisé en ce que** le système de blocage (41) s'engage sur la partie insérable (9) de la barre de boule d'attelage (4) ou sur un col de boule d'attelage (6) disposé entre la partie insérable (9) et une boule d'attelage (5).

14. Dispositif d'attelage (1) selon l'une quelconque des revendications 1 à 13, **caractérisé en ce que** le système de blocage (41) est un levier de blocage logé de manière pivotante sur une partie de véhicule (2) qui comporte un évidement (43), qui en position de repos de la barre de boule d'attelage (4) interagit avec une tige de blocage (44) reliée à la barre de boule d'attelage (4), alors que de préférence le système de blocage (41) est amovible par pivotement du levier de blocage (42) muni d'une manette (45), suite à quoi la barre de boule d'attelage (4) peut être repassée de la position de repos en direction de la position de relâchement.

15. Système de liaison (26) pour relier une barre de boule d'attelage (4) d'un dispositif d'attelage (1) avec une partie de véhicule (2), la barre de boule d'attelage (4) étant munie sur une extrémité avec une boule d'attelage (5) pour accoupler un élément d'attelage d'une remorque et sur une extrémité opposée d'une partie insérable (9) qui peut s'introduire dans une partie de logement (11) du système de logement (3) et qui peut y être bloquée dans une position de service de la barre de boule d'attelage (4) au moyen d'un élément de verrouillage (21) se trouvant dans sa position de blocage, de telle sorte que des forces et des moments naissant en position d'attelage du véhicule soient transmissibles par l'intermédiaire du système de logement (3), de la barre de boule d'attelage (4) dans la partie de véhicule (2), après passage de l'élément de verrouillage de la position de blocage dans une position de libération, la barre de boule d'attelage (4) pouvant être passée de la position de service dans une position de relâchement, dans laquelle la partie insérable (9) de la barre de boule d'attelage (4) est totalement retirée de la partie de logement (11) du système de logement (3), le système de liaison (26) assurant en supplément du système de logement (3) uniquement efficace en position de service, une liaison permanente entre la barre de boule d'attelage (4) et la partie de véhicule (2) et permettant un passage de la barre de boule d'attelage (4) de la position de relâchement dans une position de repos, dans laquelle la barre de boule d'attelage (4) est blocable au moyen d'un système de blocage et de laquelle, après relâchement du système de blocage, la barre de boule d'attelage (4) peut être repassée-en position de relâchement, **caractérisé en ce que** la partie insérable (9) de la barre de boule d'attelage (4) se trouvant en position de repos est disposée à l'extérieur de la partie de logement (11) du système de logement (3).
